# EUROPÄISCHE PATENTSCHRIFT

(11) **EP 0 737 271 B1**
(45) Veröffentlichungstag und Bekanntmachung des Hinweises auf die Patenterteilung: **31.03.1999**
(21) Anmeldenummer: 95935332.7
(22) Anmeldetag: 16.10.1995
(51) Int. Cl.: F02K 9/68

(54) **DISKUSFÖRMIGER FLUGKÖRPER FÜR EXTREM HOHE GESCHWINDIGKEITEN**
DISCUS-SHAPED AERODYNAMIC VEHICLE FOR USE AT EXTREMELY HIGH VELOCITIES
AERONEF EN FORME DE DISQUE POUR VITESSES EXTREMEMENT ELEVEES

(30) Priorität: 02.11.1994 DE 4439073
(43) Veröffentlichungstag der Anmeldung: 16.10.1996
(73) Patentinhaber: Kunkel, Klaus, 40882 Ratingen (DE)
(72) Erfinder: KUNKEL, Klaus, D-40882 Ratingen (DE); PLICHTA, Peter, D-40225 Düsseldorf (DE)
(74) Vertreter: Patentanwälte Hauck, Graalfs, Wehnert, Döring, Siemons
(86) Internationale Anmeldenummer: DE9501430
(87) Internationale Veröffentlichungsnummer: WO9614504

(56) Entgegenhaltungen:
- DE-A- 4 215 835
- GB-A- 2 147 052
- US-A- 3 336 753
- DATABASE WPI Derwent Publications Ltd., London, GB; AN 85-108095 & JP,A,60 052 578 (NEC CORPORATION)
- CHEMICAL ABSTRACTS, vol. 119, no. 20, 15.November 1993 Columbus, Ohio, US; abstract no. 206577c, YOUNG ET AL. 'Effect of organosilicon and iron compounds on thermal decomposition and burning rate of solid propellants' Seite 197; Spalte 1; & HUOYAO JISHU, Bd. 8, Nr. 2, 1992 Seiten 1-10,
- JOURNAL OF THE AMERICAN CERAMIC SOCIETY, APRIL 1986, USA, Bd. 69, Nr. 4, ISSN 0002-7820, Seiten C60-C61, HIRAO K ET AL 'Synthesis of silicon nitride by a combustion reaction under high nitrogen pressure'
- JOURNAL OF SPACECRAFT AND ROKETS, Bd. 19, Nr. 4, NEW YORK USA, Seiten 294-306, MERRIL K. KING 'ignition and combustion of boro particles and clouds'

## Beschreibung

Die vorliegende Erfindung betrifft einen diskusförmigen Flugkörper für extrem hohe Geschwindigkeiten und extreme Flughöhen mit einem Außenmantel, der bei horizontalem Flug durch eine Gasatmosphäre einen Auftrieb erzeugt, einer im peripheren Bereich des Flugkörpers angeordneten Strahltriebwerksanordnung zur Erzeugung einer Vertikalbewegung und mindestens einem Raketentriebwerk zur Verbrennung von Siliciumwasserstoffverbindungen zur Erzeugung einer Horizontalbewegung des Flugkörpers.

Um über große Strecken zu fliegen, benötigen im Unterschallbereich fliegende Langstrecken-Flugzeuge eine lange Zeit. Überschallflugzeuge mit sehr hohem Treibstoffverbrauch, wie beispielsweise die Concorde, sind zu Zwischenstopps gezwungen, um ihren Treibstoffvorrat zu ergänzen. Es besteht daher ein Bedarf nach einem wirtschaftlich zu betreibenden Langstrecken-Flugzeug, mit dem eine große Zahl von Passagieren bzw. ein großes Frachtvolumen befördert werden kann.

Ein Flugkörper der eingangs beschriebenen Art, der als Raumfluggerät ausgebildet ist, ist aus der DE 42 15 835 C2 bekannt. Der bekannte Flugkörper verfügt über 3 Antriebe.

Er arbeitet in der Startphase wie ein Hubschrauber, indem Strahlturbinen zum Einsatz kommen, die über Getriebe auf zwei gegenläufig angetriebene Ringe wirken. Diese besitzen verstellbare Schaufeln und arbeiten wie Turbinenkranze. Dadurch wird der Flugkörper zum Schweben gebracht.

In dieser Phase wird der Flugkörper durch wenigstens ein aus dem Bodenbereich des diskusförmigen Außenmantels herausklappbares, schräg zur Seite wirkendes Flugraketentriebwerk beschleunigt. In diesem Moment kann der Hubschrauberantrieb abgestellt und die Ummantelung der Turbinenkränze eingefahren werden, so daß der Flugkörper von der Außenluft abgeschlossen ist. Mit dem mindestens einen Flugraketentriebwerk ist der Flugkörper bis an den Rand der terrestrischen Stratosphäre anhebbar.

Des weiteren weist der bekannte Flugkörper wenigstens ein mittig in bezug auf den diskusförmigen Außenmantel angeordnetes Haupttriebwerk auf, mit welchem das Raumfluggerät durch den leeren Weltraum bewegbar ist.

Das Haupt triebwerk sowie das Flugraketentriebwerk sind derart ausgebildet, daß dieselben mit einem Raketentreibstoff in Form von Silanol der chemischen Formel Si₅H₁₂ bis Si₉H₂₀ antreibbar sind.

Als Oxidationsmittel zur Verbrennung der Silanöle in den beiden Raketentriebwerken, nämlich dem Flugraketentriebwerk und dem Haupttriebwerk, wird in der genannten Veröffentlichung flüssiger Sauerstoff erwähnt, wobei auch flüssiges Chlor oder Fluor genannt werden. Dieses flüssige Oxidationsmittel muß im Flugkörper mitgeführt werden. Diese Tatsache schließt jedoch die Verwendung von derartigen Flugkörpern für die Luftfahrt praktisch aus und macht diese nur als Raumfluggerät geeignet, wie dies auch in der eingangs genannten DE 42 15 835 C2 beschrieben ist. Die große Menge an mitgeführten Oxidationsmitteln macht nämlich derartige Flugkörper für den Transport von Fracht bzw. Passagieren für Langstreckenflüge ungeeignet.

Der Erfindung liegt die Aufgabe zugrunde, einen Flugkörper der angegebenen Art zu schaffen, der für Flüge im terrestrischen Bereich mit hoher Ladekapazität und besonders hohen Geschwindigkeiten geeignet ist.

Diese Aufgabe wird erfindungsgemäß bei einem diskusförmigen Flugkörper der angegebenen Art dadurch gelöst, daß das mindestens eine Raketentriebwerk als Stickstoffbrenner ausgebildet ist, in dem die Siliciumwasserstoffverbindungen mit Luft stickstoff bei erhöhten Temperaturen in Gegenwart von Luftsauerstoff als Oxidationsmittel für den Wasserstoff der Silicumwasserstoffverbindungen verbrannt werden.

Vorzugsweise werden im Stickstoffbrenner Silanöle, und dabei insbesondere solche der chemischen Formel Si₅H₁₂ bis Si₉H₂₀, verbrannt.

Bei der erfindungsgemäßen Lösung ist somit das für die Horizontalbewegung des diskusförmigen Flugkörpers sorgende Flugraketentriebwerk als Stickstoffbrenner ausgebildet, indem die Siliciumwasserstoffverbindungen, insbesondere die Silanöle, mit dem Stickstoff der Atmosphäre verbrannt werden. Das hat den Vorteil, daß der Flugkörper kein besonderes Oxidationsmittel, wie beispielsweise flüssigen Sauerstoff, für die Siliciumwasserstoffverbindungen mitführen muß, da die Erdatmosphäre zu etwa 80 % aus Stickstoff (N₂) besteht. Es wird daher Luft, insbesondere komprimierte Luft, in die Brennkammer des Raketentriebwerkes eingeführt und mit den Siliciumwasserstoffverbindungen zur Reaktion gebracht.

Bei der Verbrennung von Siliciumwasserstoffverbindungen, insbesondere Silanölen mit kompromierter Luft, reagiert der Sauerstoffanteil mit dem Wasserstoff der Silankette nach der Gleichung

4H + O₂ = 2H₂O.

Bei dieser Wasserstoff-Sauerstoff-Verbrennung werden Temperaturen von ca. 3.000° C erreicht. Diese Temperatur ist ausreichend, um das N₂-Molekül, das durch die Zufuhr der komprimierten Luft zur Verfügung gestellt wird, zu spalten. Nach der Gleichung

4N + 3Si = Si₃N₄

greifen die Stickstoffradikalen nun mit extremer Heftigkeit die freien Siliciumatome an. Es bildet sich Siliciumnitrid, das ein Molekulargewicht von 117 hat und damit fast dreimal so schwer ist wie Kohlendioxid. Die entsprechende Rückstoßwirkung ist daher im Vergleich zum Stand der Technik wesentlich verbessert.

Es versteht sich, daß die geschilderte Reaktion nur bei entsprechend hohen Temperaturen abläuft. An Luft verbrennen Silanöle nach Zündung lediglich zu rotbraunamorphem Siliciummonoxid, da der Verbrennungssubstanz bei der Blitzartigkeit der Verbrennung zu wenig Sauerstoff zur Verfügung steht. Die Reaktion mit Stickstoff unterbleibt, da Stickstoff unter diesen Bedingungen keine freien Radikale bildet.

Gegenüber üblichen Strahlturbinen, die nur ca. 20 % der Atmosphäre zur Verbrennung nutzen können, ergeben sich wesentliche Vorteile, da zur Verbrennung nicht nur auf ca. 20 % der Atmosphäre (O₂-Gehalt), sondern auch auf die weiteren ca. 80 % (N₂-Gehalt) zurückgegriffen werden kann. Das durch die Stickstoffverbrennung überwiegend gebildete Siliciumnitrid (Si₃N₄) besitzt ein wesentlich höheres Molekulargewicht als das bei Strahl turbinen des Standes der Technik entstehende Kohlendioxid, wodurch ein besonders guter Wirkungsgrad des Antriebes erreicht wird, da nach der Impulsgleichung nicht nur die Geschwindigkeit, sondern ebenfalls die Masse der Gase eine Rolle spielt.

In Weiterbildung der Erfindung werden zusätzlich zur Luft Stickstoffverbindungen bzw. Stickstoff-Sauerstoff-Verbindungen in die Brennkammer eingeführt. Dies ist insbesondere dann von Vorteil, wenn in großen Höhen (mit abnehmender Dichte der Atmosphäre) eine effektive Stickstoffverbrennung bzw. Wasserstoffverbrennung aufrechterhalten werden soll. Vorzugsweise werden solche Verbindungen eingeführt, die sowohl Stickstoff als auch Sauerstoff enthalten, um beide Reaktionen sicherzustellen, beispielsweise N₂O₄ oder Salpetersäure HNO₃. Die Erfindung schließt auch nicht aus, daß Stickstoff selbst bzw. entsprechende Oxidationsmittel im Flugkörper mitgeführt werden, um die entsprechenden Reaktionen zu initiieren bzw. aufrechtzuerhalten. Vorzugsweise wird jedoch auf den Stickstoff und Sauerstoff der Luft zurückgegriffen.

Die Reaktion läßt man vorzugsweise bei einer Temperatur oberhalb von 1.400°C ablaufen, da unterhalb dieses Wertes eine Verbrennung der Siliciumwasserstoffverbindungen, insbesondere der Silanöle, mit Stickstoff nur schwer bzw. überhaupt nicht zu verwirklichen ist. Vorzugsweise wird mit erhöhten Temperaturen von 2.500 - 3.000° C gearbeitet, die bei der Wasserstoff-Sauerstoff-Verbrennung entstehen, die aus der Reaktion des Sauerstoffanteils der Erdatmosphäre mit dem Wasserstoffanteil der Silanketten der Siliciumwasserstoffverbindungen resultiert.

Im Gegenstand zum Stand der Technik besitzt daher der erfindungsgemäß ausgebildete Flugkörper neben einer Strahltriebwerksanordnung, die zur Erzeugung einer Vertikalbewegung des Flugkörpers, d.h. zum Starten und Landen, dient, nur eine einzige Flugraketentriebeinheit, die mindestens ein als Stickstoffbrenner ausgebildetes Raketentriebwerk umfaßt. Das sogenannte Haupttriebwerk beim eingangs zitierten Stand der Technik entfällt, da der erfindungsgemäße Flugkörper als echtes Fluggerät für den terrestrischen Bereich, d.h. im Bereich der Erdatmosphäre, ausgebildet ist und kein Raumfahrzeug darstellt. Die Flugraketentriebeinheit mit dem mindestens einen Raketentriebwerk sorgt für die Hauptbewegung (Horizontalbewegung) des Flugkörpers, wobei durch die erfindungsgemäße Verbrennung der Siliciumwasserstoffverbindungen, insbesondere Silanöle, mit Stickstoff ein besonders hoher Wirkungsgrad der Triebeinheit erzielbar ist (hohe Beschleunigungen, hohe Geschwindigkeiten und hohe Nutzlasten des Flugkörpers bei vergleichsweise geringem Energieverbrauch, da der die für die Verbrennung benötigte Stickstoff der atmosphärischen Luft entnommen werden kann). Darüber hinaus ist der Flugkörper besonders umweltverträglich, da durch die Verbrennung der Siliciumwasserstoffverbindungen (Silanöle) mit Stickstoff Siliciumnitrid entsteht, das in staubförmiger Konsistenz anfällt und nicht toxisch ist.

Der Stickstoffbrenner weist eine Brennkammer, eine in die Brennkammer führende Zuführleitung für die Siliciumwasserstoffverbindungen und eine in die Brennkammer führende Zuführleitung für komprimierte Luft auf, die den Stickstoff für die Verbrennung der Siliciumwasserstoffverbindungen und den Sauerstoff für die Verbrennung des Wasserstoffes der Siliciumwasserstoffverbindungen liefert. Die Luftzuführleitung führt zu mindestens einer Lufteintrittsöffnung am Außenmantel des Flugkörpers, wobei entsprechende Kompressionseinrichtungen zwischengeschaltet sind. Die Zuführleitung für die Siliciumwasserstoffverbindungen ist vorzugsweise an eine Quelle von Silanölen angeschlossen, die in einem entsprechenden Speicherraum des Flugkörpers als Treibstoff mitgeführt werden. Die Silanöle sind flüssig und pumpfähig.

Die Brennkammer ist vorzugsweise so ausgebildet, daß die komprimierte Luft ringförmig in die Brennkammer eingespeist wird, während das Silanöl etwa zentrisch in diese eingegeben wird. Die Brennstoffzufuhr in die Brennkammer erfolgt vorzugsweise automatisch in Abhängigkeit vom Druck und der Temperatur der Brennkammer.

Das Brennkammergehäuse ist für entsprechend hohe Drücke und Temperaturen ausgelegt. Es weist zweckmäßigerweise einen Kühlmantel auf. Die Innenkammer kann durch eine Keramik- oder Edelmetallauskleidung geschützt sein. Darüber hinaus kann das Brennkammergehäuse vorzugsweise zumindest teilweise aus Titan bestehen.

Falls für die Verbrennung nicht genügend O₂ (aus der Luft) vorhanden ist, um sämtliche H-Atome der Siliciumwasserstoffverbindungen (Silanketten) zu verbrennen und eine ausreichend hohe Temperatur für die Aufspaltung des N₂-Moleküles zu erreichen, muß ggf. O₂ der Brennkammer zugeführt werden, vorzugsweise als Stickoxid. O₂ wirkt hierbei als "Zündmedium" für die nachfolgende N-Reaktion.

Das in dem erfindungsgemäßen Flugkörper zum Einsatz kommende Raketentriebwerk stellt eine Mischung aus einer Strahlturbine und einem bekannten Flüssigraketentriebwerk dar. Erfindungsgemäß werden die Vorteile von beiden bekannten System kombiniert. Das erfindungsgemäße Triebwerk arbeitet nach dem Rückstoßprinzip, d.h. ist mit einem Raketentriebwerk vergleichbar und nutzt dessen hohen Wirkungsgrad aus, greift jedoch zur Verbrennung der Siliciumwasserstoffverbindungen auf den in der Atmosphäre befindlichen Stickstoff zurück, so daß kein spezielles Oxidationsmittel im Flugkörper mitgeführt werden muß. Der Vorteil gegenüber einer herkömmlichen Strahl turbine besteht ferner darin, daß auf mechanische Elemente in der Brennkammer verzichtet werden kann.

Zweckmäßigerweise ist das mindestens eine Raketentriebwerk im Bodenbereich des diskusförmigen Außenmantels des Flugkörpers angeordnet. Es ist vorzugsweise aus dem Bodenbereich des Außenmantels herausklappbar, so daß es schräg zur Seite wirkt, um einen Antrieb des Flugkörpers in Horizontalrichtung zu ermöglichen. Der Flugkörper weist ferner vorzugsweise im Bodenbereich des diskusförmigen Außenmantels mindestens eine Lufteintrittsöffnung auf. Von dort wird die Luft, ggf. nach Entspannung, über Kompressionseinrichtungen in die Brennkammer des Raketentriebwerkes eingeführt. Die Lufteintrittsöffnung ist vorzugsweise als aus dem Bodenbereich herausklappbarer und schräg zur Seite wirkender Luftkasten ausgebildet.

Der Flugkörper funktioniert derart, daß er mit Hilfe der im peripheren Bereich des Flugkörpers angeordneten Strahltriebwerksanordnung (Hubschraubertriebwerk) startet und landet. Nach dem Abheben wird mit dem mindestens einen Raketentriebwerk seitlich beschleunigt. Ab einer Geschwindigkeit von etwa 300 km/h können die Turbinenkränze des Hubschraubertriebwerks abgeschaltet werden, da der diskusförmige Flugkörper aufgrund seines Auftriebs von der Lufthülle getragen wird. Durch Beschleunigung mit dem Raketentriebwerk auf etwa 5.000 km/h gewinnt der diskusförmige Flugkörper von allein an Höhe, wobei in 50 km/h Höhe bei dieser Geschwindigkeit immer noch genügend Luft für das Raketentriebwerk zur Verfügung steht. Diese Vorgehensweise wird fortgesetzt bis auf eine Höhe von mindestens 80 km bei etwa 8.000 km/h. Die Luft ist hier so dünn, daß der Luftwiderstand äußerst gering ist. Mit gedrosseltem Raketentriebwerk, dem ggf. energiereiche, flüssige Stickstoff-Sauerstoff-Verbindungen zugefügt werden, schießt der Flugkörper bei dieser Reisegeschwindigkeit durch den beginnenden Weltraum. Zu einem bestimmten Zeitpunkt kann das Raketentriebwerk vollständig abgestellt werden, da die hohe Geschwindigkeit trotz der später beginnenden Bremsung noch für eine lange Reisestrecke ausreicht. Die immer stärker werdende Bremsung und die vorzugsweise mit Keramik gepanzerte Unterseite des Flugkörpers erlaubt einen Landeanflug wie beim Starten mit wiederangestellten Turbinen.

Die Erfindung wird nachfolgend anhand eines Ausführungsbeispiels in Verbindung mit der Zeichnung im einzelnen erläutert. Es zeigen:
- Figur 1: eine schematische seitliche Ansicht eines diskusförmigen Flugkörpers für extreme Geschwindigkeiten;
- Figur 2: in der Seitenansicht (durchbrochen) den schematischen Aufbau eines Raketentriebwerkes des Flugkörpers; und
- Figur 3: einen Horizontalschnitt durch Figur 2.

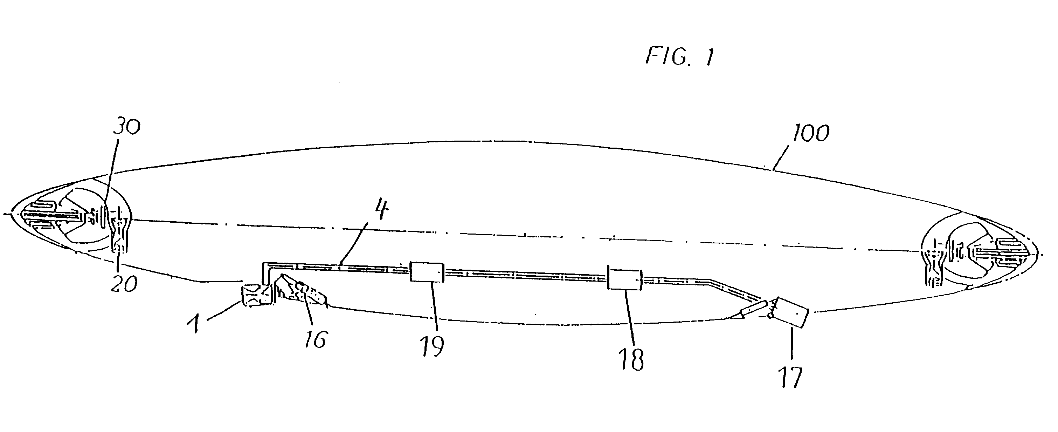

Der in Figur 1 dargestellte diskusförmige Flugkörper 100 besitzt, abgesehen von seinem Hauptantrieb, im wesentlichen den gleichen Aufbau wie der in der eingangs genannten DE 42 15 835 C2 beschriebene Flugkörper. Einzelheiten, die in der vorliegenden Beschreibung nicht enthalten sind, können daher der genannten Veröffentlichung entnommen werden.

Der in Figur 1 gezeigte Flugkörper 100 weist einen diskusförmigen Außenmantel auf, welcher derart konfiguriert ist, daß bei schrägem Flug durch ein gasförmiges Medium ein Auftrieb entsteht.

Im peripheren Bereich des Flugkörpers ist eine Vielzahl, vorzugsweise 4, von jeweils um 90° gegeneinander versetzt angeordneten Strahl triebwerken 20 vorgesehen, welche über entsprechende Getriebe 30 zwei entlang des gesamten Umfangs des Flugkörpers geführte Ringe gegenläufig antreiben, an denen winkelmäßig verstellbare Rotorblätter befestigt sind. Diese Rotorblätter bilden dabei in der Art eines Impellers zwei Schaufelkränze, mit welchen ein nach unten gerichteter Luftstrom erzeugt werden kann.

Weitere Einzelheiten in bezug auf die Konstruktion und die Funktionsweise der Strahltriebwerke gehen aus der vorstehend erwähnten DE 42 15 835 C2 hervor und müssen an dieser Stelle nicht separat behandelt werden.

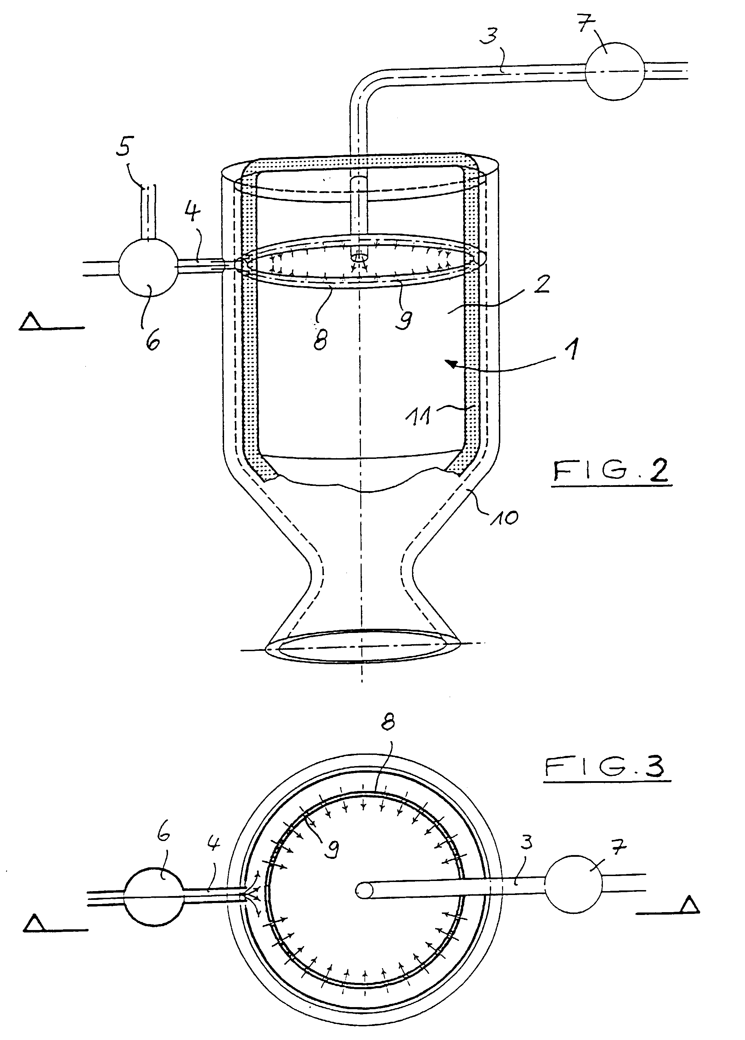

Im Bereich der unteren Fläche des diskusförmigen Flugkörpers 100 ist ein Raketentriebwerk 1 vorgesehen, das in Einzelheiten in den Figuren 2 und 3 dargestellt ist. Dieses Raketentriebwerk 1 kann nach Öffnung einer entsprechenden Klappe mit Hilfe eines Hydraulikzylinders 16 in eine schräg nach unten gerichtete Position geschwenkt werden. Es ist dabei mit einer steuerbaren Aufhängung versehen, um eine Steuerung des gesamten Flugkörpers vornehmen zu können. Je nach Bedarf, ist eine Vielzahl von derartigen Raketentriebwerken 1 auf der Unterseite des Flugkörpers vorgesehen.

Das Raketentriebwerk 1 besitzt eine in den Figuren 2 und 3 gezeigte Brennkammer 2, der einerseits Silanöle als Treibstoff und andererseits komprimierte Luft zum Verbrennen des Treibstoffes zugeführt werden. Die Luftzuführung ist in Figur 1 schematisch angedeutet. Eine Luftzuführleitung 4 mündet in die Brennkammer 2 des Triebwerks. Die Luft wird der den Flugkörper umgebenden Atmosphäre entnommen, und zwar über eine Lufteinlaßöffnung, die hier als Luftfangkasten 17 dargestellt ist, der verschwenkbar an der Unterseite des Flugkörpers vorgesehen ist. Das Verschwenken des Luftfangkastens 17 erfolgt über einen geeigneten Hydraulikzylinder. Von hier gelangt die einströmende Luft über die Leitung 4 in eine Luftentspannungseinrichtung 18 und von dort in eine Kompressionseinrichtung 19. Beide Einrichtungen sind nur schematisch angedeutet. Von der Kompressionseinrichtung 19 gelangt die stark komprimierte Luft in die Brennkammer 2 des Triebwerkes.

Der genaue Aufbau des Triebwerkes ist in den Figuren 2 und 3 dargestellt, wobei das Triebwerk hier in Vertikalstellung gezeigt ist. Es nimmt normalerweise an der Unterseite des Flugkörpers eine Horizontal- bzw. Schrägstellung ein.

Das Triebwerk weist eine Brennkammer 2 auf, deren Gehäuse 11 aus einem geeigneten hochtemperaturfesten Material, beispielsweise Metall oder Keramik, besteht. Vorzugsweise besteht das Gehäuse zumindest teilweise aus Titan. Das Gehäuse ist von einem geeigneten Kühlmantel 10 umgeben.

Im übrigen ist die Brennkammer wie die Brennkammer eines bekannten Raketentriebwerkes ausgebildet und weist an ihrem in der Figur unteren Ende eine Austrittsöffnung auf, die mit einer entsprechenden Verengung zur Erhöhung der Geschwindigkeit der Verbrennungsgase versehen ist.

In die Brennkammer mündet einerseits die Zuführleitung 4 für die komprimierte Luft, die durch den bei 6 schematisch dargestellten Kompressor verdichtet wird. Die Zuführleitung 4 führt die komprimierte Luft in einen in der Brennkammer angeordneten Ring 8, der mit einer Vielzahl von nach innen gerichteten Düsenaustrittsöffnungen 9 versehen ist, über die die komprimierte Luft in das Innere der Brennkammer geführt wird. Des weiteren mündet in die Brennkammer eine Zuführleitung 3 für Silanöle, die über eine Pumpe 7 in die Brennkammer eingeführt werden, und zwar in das Innere des Ringes 8. Die Einführung kann dabei über eine geeignete Einspritzvorrichtung (nicht gezeigt) erfolgen.

Der Sauerstoffanteil der komprimierten Luft reagiert mit dem Wasserstoff der Silankette zur Bildung von H₂O. Bei der entsprechenden Wasserstoff-Sauerstoff-Verbrennung werden ausreichend hohe Temperaturen erreicht, um das N₂-Molekül zu spalten. Die freien Stickstoffradikale greifen nunmehr die freien Silciumatome an, wodurch die gewünschte Verbrennung mit Stickstoff entsteht. Es bildet sich Si₃N₄. Wenn nicht genügend Luft zur Verfügung steht, können der Brennkammer zusätzliche Stickstoff-Sauerstoff-Verbindungen, wie beispielsweise NO₂ oder HNO₃, zugeführt werden, wie schematisch durch die Leitung 5 angedeutet ist.

Eine weitere bevorzugte Verbindung ist Tetrafluorhydrazin, welche sowohl den benötigten Stickstoff als auch das benötigte Oxidationsmittel, nämlich Fluor, liefert.

Figur 3 zeigt einen Horizontalschnitt durch die Brennkammer der Figur 2.

Die Funktionsweise des erfindungsgemäßen Flugkörpers ist wie folgt:

Bei dem auf nicht dargestellten Fußstützen ruhenden Flugkörper werden zuerst die Strahltriebwerke 20 in Betrieb genommen. Über die Getriebe 30 werden dadurch die beiden Ringe mit den entsprechenden Schaufelkränzen gegenläufig in Drehung versetzt, wodurch ein nach unten gerichteter Luftstrom erzeugt wird. Auf diese Weise wird der Flugkörper in der Art eines Hubschraubers vom Boden abgehoben.

Während der Flugkörper über dem Boden schwebt, wird das außermittig im Bodenbereich des Außenmantels des Flugkörpers vorgesehene Raketentriebwerk 1 mit Hilfe des Hydraulikzylinders 16 in die in Figur 1 dargestellte Position geschwenkt und in Betrieb genommen. Mit Hilfe dieses Raketentriebwerkes wird der Flugkörper seitlich beschleunigt. Noch vor Erreichen der Schallgeschwindigkeit können die Rotorblätter der Schaufelkränze waagrecht gestellt werden, weil mit zunehmender Geschwindigkeit nunmehr die aerodynamische Form des Außenmantels den erforderlichen Auftrieb ergibt. Bei einer Geschwindigkeit von etwa 1.000 km/h und einer Flughöhe von etwa 5 km werden die Strahltriebwerke 20 abgestellt. Das Nachlaufen der Schaufelkränze stabilisiert den Flugkörper.

Mit Hilfe des Raketentriebwerkes 15 kann der Flugkörper nunmehr auf eine Geschwindigkeit von etwa 6.000 km/h beschleunigt werden. Der mit zunehmender Flughöhe in etwa exponentiell abfallende Luftdruck wird dabei durch die zunehmend höhere Geschwindigkeit des Raumfluggerätes kompensiert, so daß auf diese Weise mit Hilfe des Schrägfluges eine Flughöhe von etwa 50 km erreicht werden kann.

Zum Landen des Flugkörpers wird das Raketentriebwerk 1 abgestellt und zurückgeschwenkt. Auch die entsprechenden Luftkasten werden zurückgeschwenkt. Es werden dann die Strahltriebwerke 20 wieder angestellt, so daß der Flugkörper in Vertikalrichtung eine sanfte Abwärtsbewegung durchführen kann.

Mit dem erfindungsgemäß ausgebildeten Flugkörper können somit Langstreckenflüge in großen Höhen (wenigstens 80 km) mit großen Geschwindigkeiten (etwa 8000 km/h) durchgeführt werden. Die Luft ist in diesem Bereich so dünn, daß der Luftwiderstand äußerst gering ist, jedoch noch genügend Luft für die benötigte Verbrennung zur Verfügung steht. Der Flugkörper kann in diesem Bereich mit gedrosselten Raketenmotoren, denen gegebenenfalls energiereiche, flüssige Stickstoff-Sauerstoff-Verbindungen zugeführt werden, bei einer derartigen Reisegeschwindigkeit wie eine Frisbeescheibe durch den beginnenden Weltraum schießen. Zu einem bestimmten Zeitpunkt können die Raketenmotoren gänzlich abgestellt werden, da die hohe Geschwindigkeit trotz der später beginnenden Bremsung noch für eine lange Reisestrecke ausreicht. Die immer stärker werdende Bremsung durch die mit Keramik gepanzerte Unterseite des Flugkörpers erlaubt einen Landeanflug mit wieder angestellten Turbinen.

Es lassen sich somit sehr hohe Geschwindigkeiten bei sehr hohen Flughöhen erreichen, wobei ggf. unter Ausnutzung eines Segeleffektes ohne Antrieb geflogen werden kann. Durch den Turbinenantrieb existiert die Möglichkeit einer Punktlandung, so daß der Flugkörper einen sehr großen Einsatzbereich hat.

## Patentansprüche

1. Diskusförmiger Flugkörper für extrem hohe Geschwindigkeiten und extreme Flughöhen mit einem Außenmantel (100), der bei horizontalem Flug durch eine Gasatmosphäre einen Auftrieb erzeugt, einer im peripheren Bereich des Flugkörpers angeordneten Strahltriebwerksanordnung (20) zur Erzeugung einer Vertikalbewegung und mindestens einem Raketentriebwerk (1) zur Verbrennung von Siliciumwasserstoffverbindungen zur Erzeugung einer Horizontalbewegung des Flugkörpers, dadurch gekennzeichnet, daß das mindestens eine Raketentriebwerk (1) als Stickstoffbrenner ausgebildet ist, in dem die Siliciumwasserstoffverbindungen mit Luftstickstoff bei erhöhten Temperaturen in Gegenwart von Luftsauerstoff als Oxidationsmittel für den Wasserstoff der Siliciumwasserstoffverbindungen verbrannt werden.

2. Flugkörper nach Anspruch 1, dadurch gekennzeichnet, daß das Raketentriebwerk (1) Silanöle verbrennt.

3. Flugkörper nach Anspruch 2, dadurch gekennzeichnet, daß das Raketentriebwerk Silanöle der chemischen Formel Si₅H₁₂ bis Si₉H₂₀ verbrennt.

4. Flugkörper nach einem der vorangehenden Ansprüche, dadurch gekennzeichnet, daß das Raketentriebwerk (1) zusätzlich zum Luftstickstoff und Luftsauerstoff zur Verbrennung Stickstoffverbindungen bzw. Stickstoff-Sauerstoff-Verbindungen verwendet.

5. Flugkörper nach einem der vorangehenden Ansprüche, dadurch gekennzeichnet, daß das Raketentriebwerk (1) eine Brennkammer (2), eine in die Brennkammer (2) führende Zuführleitung (3) für die Siliciumwasserstoffverbindungen und eine in die Brennkammer (2) führende Zuführleitung für Luftstickstoff und Luftsauerstoff aufweist.

6. Flugkörper nach Anspruch 5, dadurch gekennzeichnet, daß die Zuführleitung (4) für Luftstickstoff und Luftsauerstoff an eine Quelle komprimierter Luft angeschlossen ist.

7. Flugkörper nach Anspruch 5 oder 6, dadurch gekennzeichnet, daß die komprimierte Luft ringförmig in die Brennkammer (2) eingespeist wird.

8. Flugkörper nach einem der Ansprüche 5 bis 7, dadurch gekennzeichnet, daß die Brennkammer (2) einen Kühlmantel (10) aufweist.

9. Flugkörper nach einem der Ansprüche 5 bis 8, dadurch gekennzeichnet, daß das Brennkammergehäuse zumindest teilweise aus Titan besteht.

10. Flugkörper nach einem der Ansprüche 5 bis 9, dadurch gekennzeichnet, daß die Zuführung der Siliciumwasserstoffverbindungen, der komprimierten Luft und/oder der Stickstoff-Sauerstoff-Verbindungen in die Brennkammer (2) in Abhängigkeit vom Druck und der Temperatur der Brennkammer automatisch durchgeführt wird.

11. Flugkörper nach einem der vorangehenden Ansprüche, dadurch gekennzeichnet, daß das mindestens eine Raketentriebwerk (1) im Bodenbereich des diskusförmigen Außenmantels des Flugkörpers angeordnet ist.

12. Flugkörper nach Anspruch 11, dadurch gekennzeichnet, daß das mindestens eine Raketentriebwerk (1) aus dem Bodenbereich des Außenmantels herausschwenkbar ist, so daß es schräg zur Seite wirkt.

13. Flugkörper nach Anspruch 11 oder 12, dadurch gekennzeichnet, daß er im Bodenbereich des diskusförmigen Außenmantels mindestens eine Lufteintrittsöffnung aufweist.

14. Flugkörper nach Anspruch 13, dadurch gekennzeichnet, daß die Lufteintrittsöffnung als aus dem Bodenbereich herausklappbarer und schräg zur Seite wirkender Luftkasten (17) ausgebildet ist.

## Claims

1. A discus-shaped aerodyne for extremely high velocities and extreme altitudes comprising an outer casing (100) configured to generate buoyancy upon horizontal travel through a gas atmosphere, a jet arrangement (20) disposed in the peripheral area of the aerodyne for the generation of a vertical movement, and at least one rocket drive (1) for the combustion of silicon hydride compounds for the generation of a horizontal movement of the aerodyne, characterized in that the at least one rocket drive (1) is formed as nitrogen burner in which the silicon hydride compounds are burned with atmospheric nitrogen at increased temperatures in the presence of atmospheric oxygen as an oxidizing agent for the hydrogen of the silicon hydride compounds.

2. The aerodyne according to claim 1, characterized in that the rocket drive (1) burns silane oils.

3. The aerodyne according to claim 2, characterized in that the rocket drive burns silane oils of the chemical formula Si₅H₁₂ - Si₉H₂₀.

4. The aerodyne according to one of the preceding claims, characterized in that the rocket drive (1) uses nitrogen compounds or nitrogen-oxygen compounds for the combustion in addition to the atmospheric nitrogen and the atmospheric oxygen.

5. The aerodyne according to one of the preceding claims, characterized in that the rocket drive (1) includes a combustion chamber (2), a supply line (3) for the silicon hydride compounds leading into the combustion chamber (2), and a supply line for atmospheric nitrogen and atmospheric oxygen leading into the combustion chamber (2).

6. The aerodyne according to claim 5, characterized in that the supply line (4) for atmospheric nitrogen and atmospheric oxygen is connected to a source of compressed air.

7. The aerodyne according to claim 5 or 6, characterized in that the compressed air is introduced annularly into the combustion chamber (2).

8. The aerodyne according to one of the claims 5 to 7, characterized in that the combustion chamber (2) has a cooling jacket (10).

9. The aerodyne according to one of the claims 5 to 8, characterized in that the casing of the combustion chamber consists at least partially of titanium.

10. The aerodyne according to one of the claims 5 to 9, characterized in that the introduction of the silicon hydride compounds, the compressed air and/or the nitrogen-oxygen compounds into the combustion chamber (2) is carried out automatically in response to the pressure and the temperature of the combustion chamber.

11. The aerodyne according to one of the preceding claims, characterized in that the at least one rocket drive (1) is disposed in the bottom region of the discus-shaped outer casing of the aerodyne.

12. The aerodyne according to claim 11, characterized in that the at least one rocket drive (1) is adapted to be swung out from the bottom region of the outer casing so that said rocket drive acts laterally obliquely.

13. The aerodyne according to claim 11 or 12, characterized in that it comprises at least one air inlet opening in the bottom region of the discus-shaped outer casing.

14. The aerodyne according to claim 13, characterized in that the air inlet opening is formed as an air box (17) adapted to be swung out from the bottom region and acting laterally obliquely.

## Revendications

1. Aéronef en forme de disque pour vitesses extrêmement élevées et altitudes de vol extrêmes, comprenant une enveloppe extérieure (100), qui produit une sustentation lors d'un vol horizontal dans une atmosphère gazeuse, un agencement de moteurs à réaction (20), disposé dans la zone périphérique de l'aéronef et servant à produire un déplacement vertical, et au moins un moteur-fusée (1) servant à la combustion de composés d'hydrogène et de silicium pour produire un déplacement horizontal de l'aéronef, caractérisé en ce qu'au moins un moteur-fusée (1) est réalisé sous forme d'un brûleur à azote dans lequel on fait brûler les composés d'hydrogène et de silicium avec l'azote de l'air, à des températures élevées, en présence de l'oxygène de l'air servant d'agent oxydant pour l'hydrogène des composés d'hydrogène et de silicium.

2. Aéronef suivant la revendication 1, caractérisé en ce que le moteur-fusée (1) brûle des silanes.

3. Aéronef suivant la revendication 2, caractérisé en ce que le moteur-fusée brûle des silanes de formule chimique Si₅H₁₂ à Si₉H₂₀.

4. Aéronef suivant l'une des revendications précédentes, caractérisé en ce que, pour la combustion, le moteur-fusée (1) utilise, en plus de l'azote de l'air et de l'oxygène de l'air, des composés d'azote ou des composés d'azote et d'oxygène.

5. Aéronef suivant l'une des revendications précédentes, caractérisé en ce que le moteur-fusée (1) comprend une chambre de combustion (2), une conduite (3) d'acheminement des composés d'hydrogène et de silicium, qui débouche dans la chambre de combustion (2), et une conduite d'acheminement de l'azote de l'air et de l'oxygène de l'air, qui débouche dans la chambre de combustion (2).

6. Aéronef suivant la revendication 5, caractérisé en ce que la conduite (4) d'acheminement de l'azote de l'air et de l'oxygène de l'air est raccordée à une source d'air comprimé.

7. Aéronef suivant la revendication 5 ou 6, caractérisé en ce que l'air comprimé est introduit dans la chambre de combustion (2) suivant un agencement en forme d'anneau.

8. Aéronef suivant l'une des revendications 5 à 7, caractérisé en ce que la chambre de combustion (2) comprend une enveloppe de refroidissement (10).

9. Aéronef suivant l'une des revendications 5 à 8, caractérisé en ce que le corps de la chambre de combustion est constitué au moins partiellement de titane.

10. Aéronef suivant l'une des revendications 5 à 9, caractérisé en ce que l'acheminement des composés d'hydrogène et de silicium, de l'air comprimé et/ou des composés d'azote et d'oxygène dans la chambre de combustion (2) est effectuée automatiquement en fonction de la pression et de la température de la chambre de combustion.

11. Aéronef suivant l'une des revendications précédentes, caractérisé en ce que le moteur-fusée (1) prévu en au moins un exemplaire est disposé dans la zone de fond de l'enveloppe extérieure en forme de disque de l'aéronef.

12. Aéronef suivant la revendication 11, caractérisé en ce que le moteur-fusée (1) prévu en au moins un exemplaire est rabattable hors de la zone de fond de l'enveloppe extérieure, de sorte qu'il agit d'une manière inclinée vers le côté.

13. Aéronef suivant la revendication 11 ou 12, caractérisé en ce qu'il comprend au moins une ouverture d'entrée d'air dans la zone de fond de l'enveloppe extérieure en forme de disque.

14. Aéronef suivant la revendication 13, caractérisé en ce que l'ouverture d'entrée d'air est réalisée sous forme d'un caisson d'air (17) rabattable hors de la zone de fond et exerçant sa fonction d'une manière inclinée vers le côté.
